# EUROPEAN PATENT APPLICATION

(11) **EP 3 073 716 A1**
(43) Date of publication of application: **28.09.2016**
(21) Application number: 14862639.3
(22) Date of filing: 29.04.2014
(51) Int. Cl.: H04M 1/725

(54) **METHOD, APPARATUS, AND MOBILE PHONE FOR CALCULATING AMOUNT OF MOTION**

(30) Priority: 18.11.2013 CN 201310578569
(71) Applicant: ZTE Corporation, Shenzhen, Guangdong 518057 (CN)
(72) Inventor: LI, Huan, Shenzhen Guangdong 518057 (CN)
(74) Representative: Novagraaf Technologies
(86) International application number: PCT/CN2014/076490
(87) International publication number: WO 2015/070574

(57) **Abstract**

A method, an apparatus and a mobile phone for calculating the amount of exercise are provided. The method includes: acquiring information related to a road environment; determining, according to the acquired information related to the road environment, a first correction parameter corresponding to the information related to the road environment; acquiring a motion displacement of a user; and determining the amount of exercise of the user according to the motion displacement and the first correction parameter. With the technical solutions provided by the present disclosure, information related to a road environment is acquired through a sensor, so that the amount of exercise of a user can be calcualted in combination with the road environment.

## Description

### Technical Field

The present disclosure relates to the field of communications, and in particular to a method, an apparatus and a mobile phone for calculating the amount of exercise.

### Background

As people pay more attention to their health, they expect to monitor and record their exercise conditions by means of some tools. Pedometer is such a simple tool. However, a pedometer can only count the steps of walking or running of a person coarsely, without combining with a road environment.

### Summary

In order to solve the above problem, the embodiment of the present disclosure provides a method, an apparatus and a mobile phone for calculating the amount of exercise, which can calculate the amount of exercise of a user in combination with a road environment.

According to one aspect of the present disclosure, the embodiment of the present disclosure provides a method for calculating the amount of exercise, including: acquiring information related to a road environment; determining, according to the acquired information related to the road environment, a first correction parameter corresponding to the information related to the road environment; acquiring a motion displacement of a user; and determining the amount of exercise of the user according to the motion displacement and the first correction parameter.

Preferably, before acquiring information related to a road environment, the method further includes: acquiring a exercise mode selected by the user from the preset exercise modes, the exercise mode being a motion manner defined according to a motion type; acquiring a second correction parameter corresponding to the selected exercise mode; determining the amount of exercise of the user specifically includes: determining the amount of exercise of the user according to the motion displacement, the first correction parameter and the second correction parameter.

Preferably, before acquiring information related to a road environment, the method further includes: calculating the time of motion of the user; acquiring information related to a road environment specifically includes: when the time of motion of the user reaches a preset time, acquiring information related to the road environment; acquiring a motion displacement of the user specifically includes: when the time of motion of the user reaches a preset time, acquiring a motion displacement of the user.

Preferably, the information related to a road environment includes: road surface elevation information, acceleration change information related to the road surface bumpy degree; determining, according to the acquired information related to the road environment, a first correction parameter corresponding to the information related to the road environment specifically includes: determining, according to the road surface elevation information, an elevation change correction parameter corresponding to the road surface elevation information; and determining, according to the acceleration change information related to the road surface bumpy degree, a road surface bump correction parameter.

Preferably, the exercise mode includes walking, running and riding a bicycle.

According to another aspect of the present disclosure, the embodiment of the present disclosure also provides an apparatus for calculation the amount of exercise, including: a sensor module, which is configured to acquire information related to a road environment; a first determination module, which is configured to determine, according to the acquired information related to the road environment, a first correction parameter corresponding to the information related to the road environment; a GPS module, which is configured to acquire a motion displacement of a user; and a second determination module, which is configured to determine the amount of exercise of the user according to the motion displacement and the first correction parameter.

Preferably, the apparatus further includes: a first acquisition module, which is configured to acquire a exercise mode selected by the user from the preset exercise modes, the exercise mode being a motion manner defined according to a motion type; a second acquisition module, which is configured to acquire a second correction parameter corresponding to the selected exercise mode; the second determination module is further configured to determine the amount of exercise of the user according to the motion displacement, the first correction parameter and the second correction parameter.

Preferably, the apparatus further includes: a timing module, which is configured to calculate the time of motion of the user; the sensor module is configured to acquire information related to the road environment when the time of motion of the user reaches a preset time; a GPS module, which is configured to acquire a motion displacement of the user when the time of motion of the user reaches a preset time.

Preferably, the sensor module includes: a motion detection sensor, which is configured to acquire acceleration change information related to the road surface bumpy degree; a pressure sensor, which is configured to acquire road surface elevation information; the first determination module includes: a first determination unit, which is configured to determine, according to the road surface elevation information, an elevation change correction parameter corresponding to the road surface elevation information; and a second determination unit, which is configured to determine, according to the acceleration change information related to the road surface bumpy degree, a road surface bump correction parameter.

Preferably, the motion detection sensor includes: acceleration sensor, magnetic sensor, gyroscope sensor.

According to another aspect of the present disclosure, the embodiment of the present disclosure also provides a mobile phone, including an apparatus for calculating the amount of exercise described above.

The technical solution provided by the embodiment of the present disclosure has advantages as follows:
with the technical solutions provided by the present disclosure, information related to a road environment is acquired through a sensor, so that the amount of exercise of a user can be calculated in combination with the road environment.

### Brief Description of the Drawings

Fig. 1 is a flowchart of a method for calculating the amount of exercise according to Embodiment 1 of the present disclosure;
Fig. 2 is a structure diagram of an apparatus for calculating the amount of exercise according to Embodiment 1 of the present disclosure; and
Fig. 3 is a flowchart of a method for calculating the amount of exercise according to Embodiment 2 of the present disclosure.

### Detailed Description of the Embodiments

For a better understanding of the technical problem, technical scheme and advantages of the present disclosure, a detailed description is provided for the present disclosure below in conjunction with accompanying drawings and embodiments.

In view of the problems in conventional art that only steps of walking or running of a person can be recorded coarsely during the process of monitoring and recording the motion amount of the user and the road environment is not taken into the calculation of the motion amount of user, the embodiment of the present disclosure provides a method, an apparatus and a mobile phone for calculating the amount of exercise, which can calculate the amount of exercise of a user in combination with the road environment.

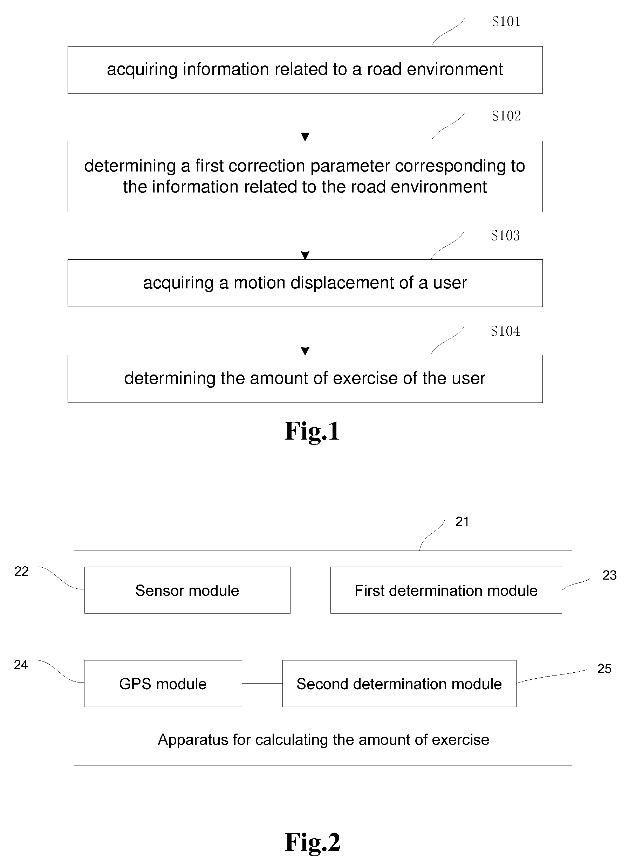

Fig. 1 is a flowchart of a method for calculating the amount of exercise according to Embodiment 1 of the present disclosure; as shown in Fig. 1, the method includes:
S101: acquiring information related to a road environment.
S102: determining, according to the acquired information related to the road environment, a first correction parameter corresponding to the information related to the road environment.
S103: acquiring a motion displacement of a user.
S104: determining the amount of exercise of the user according to the motion displacement and the first correction parameter.

In the technical scheme above, the information related to the road environment is acquired first, then the first correction parameter is determined according to the information related to the road environment, and then the motion displacement of the user is acquired after the user finishes motion, finally the amount of exercise of the user can be determined according to the displacement of the user and the first correction parameter. Since the first correction parameter corresponding to the information related to the road environment is used to perform correction during the process of determining the amount of exercise of the user, the amount of exercise of the user can be calculated in combination with the road environment.

There are various motion manners for a user to select and different motion manners generate different amounts of motion, for example, running the same distance as walking generates a different amount of exercise.

In order to solve the above problem, preferably, before acquiring information related to a road environment, the method further includes: acquiring a exercise mode selected by the user from the preset exercise modes, the exercise mode being a motion manner defined according to a motion type; acquiring a second correction parameter corresponding to the selected exercise mode; determining the amount of exercise of the user specifically includes: determining the amount of exercise of the user according to the motion displacement, the first correction parameter and the second correction parameter.

In the technical scheme above, after the exercise mode selected by the user is acquired from the preset exercise modes, and after the second correction parameter corresponding to the selected exercise mode is acquired, the amount of exercise of the user can be determined according to the motion displacement of the user, the first correction parameter and the second correction parameter; therefore, the calculation for the amount of exercise of the user can be realized in combination with the motion manner of the user.

Since the road environment selected by a user during the motion process does not change constantly, the real-time acquisition of information related to the road environment probably will impact performance.

In order to solve the above problem, preferably, before acquiring the motion displacement of the user, the method further includes: calculating the time of motion of the user; acquiring a motion displacement of the user specifically includes: when the time of motion of the user reaches a preset time, acquiring a motion displacement of the user; acquiring information related to a road environment specifically includes: when the time of motion of the user reaches a preset time, acquiring information related to the road environment.

In the technical scheme above, before the motion displacement of the user is acquired, the time of motion of the user is calculated; when the time of motion of the user reaches a preset time, the motion displacement of the user is acquired and the information related to the road environment is acquired. Since the user selects the same road environment within the preset time, the information related to the road environment needs to be acquired once only.

When a user moves on a road with a bumpy surface, the amount of exercise is different from the amount of exercise on a smooth road surface; when moving on a road with a slope, the amount of exercise is different from the amount of exercise on a flat road.

In order to solve the above problem, preferably, the information related to a road environment might include: road surface elevation information, acceleration change information related to the road surface bumpy degree; determining, according to the acquired information related to the road environment, a first correction parameter corresponding to the information related to the road environment specifically includes: determining, according to the road surface elevation information, an elevation change correction parameter corresponding to the road surface elevation information; and determining, according to the acceleration change information related to the road surface bumpy degree, a road surface bump correction parameter.

In the technical scheme above, acquiring the road surface elevation information and acceleration change information related to the road environment can facilitate learning the slope condition of the road according to the road surface elevation information; since acceleration changes when moving on a bumped road surface, the bump condition of the road surface can be learned according to the acceleration change information; according to the road surface elevation information, an elevation change correction parameter corresponding to the road surface elevation information can be determined; according to the acceleration change information related to the road surface bumpy degree, a road surface bump correction parameter can be determined. The elevation change correction parameter and the road surface bump correction parameter can be used to correct the amount of exercise of a user.

Preferably, the exercise mode might include walking, running and riding a bicycle.

In the technical scheme above, the exercise mode might include walking, running and riding a bicycle, and of course might include other various exercise modes.

Fig. 2 is a structure diagram of an apparatus for calculating the amount of exercise according to Embodiment 1 of the present disclosure; as shown in Fig. 2, the apparatus 21 includes:
a sensor module 22, which is configured to acquire information related to a road environment;
a first determination module 23, which is configured to determine, according to the acquired information related to the road environment, a first correction parameter corresponding to the information related to the road environment;
a GPS module 24, which is configured to acquire a motion displacement of a user; and
a second determination module 25, which is configured to determine the amount of exercise of the user according to the motion displacement and the first correction parameter.

In the technical scheme above, after the sensor module 22 acquires the information related to the road environment, the first determination module 23 determines the first correction parameter according to the information related to the road environment, the GPS module 24 acquires the motion displacement of the user, and the second determination module 25 determines the amount of exercise of the user according to the motion displacement and the first correction parameter. Since the first correction parameter corresponding to the information related to the road environment is used to perform correction during the process of determining the amount of exercise of the user, the amount of exercise of the user can be calculated in combination with the road environment.

Preferably, the apparatus further includes: a first acquisition module, which is configured to acquire a exercise mode selected by the user from the preset exercise modes, the exercise mode being a motion manner defined according to a motion type; a second acquisition module, which is configured to acquire a second correction parameter corresponding to the selected exercise mode; the second determination module is further configured to determine the amount of exercise of the user according to the motion displacement, the first correction parameter and the second correction parameter.

Preferably, the apparatus might further include: a timing module, which is configured to calculate the time of motion of the user; the sensor module is configured to acquire information related to the road environment when the time of motion of the user reaches a preset time; a GPS module, which is configured to acquire a motion displacement of the user when the time of motion of the user reaches a preset time.

Preferably, the sensor module might include: a motion detection sensor, which is configured to acquire acceleration change information related to the road surface bumpy degree; a pressure sensor, which is configured to acquire road surface elevation information; the first determination module might include: a first determination unit, which is configured to determine, according to the road surface elevation information, an elevation change correction parameter corresponding to the road surface elevation information; and a second determination unit, which is configured to determine, according to the acceleration change information related to the road surface bumpy degree, a road surface bump correction parameter.

Preferably, the motion detection sensor might include: acceleration sensor, magnetic sensor, gyroscope sensor.

In the technical scheme above, the motion detection sensor is used to detect acceleration change information, which might include: acceleration sensor, magnetic sensor, gyroscope sensor, and of course might include other sensors, only if the sensors can detect the acceleration change information.

The present disclosure also provides a mobile phone, including an apparatus for calculating the amount of exercise described above.

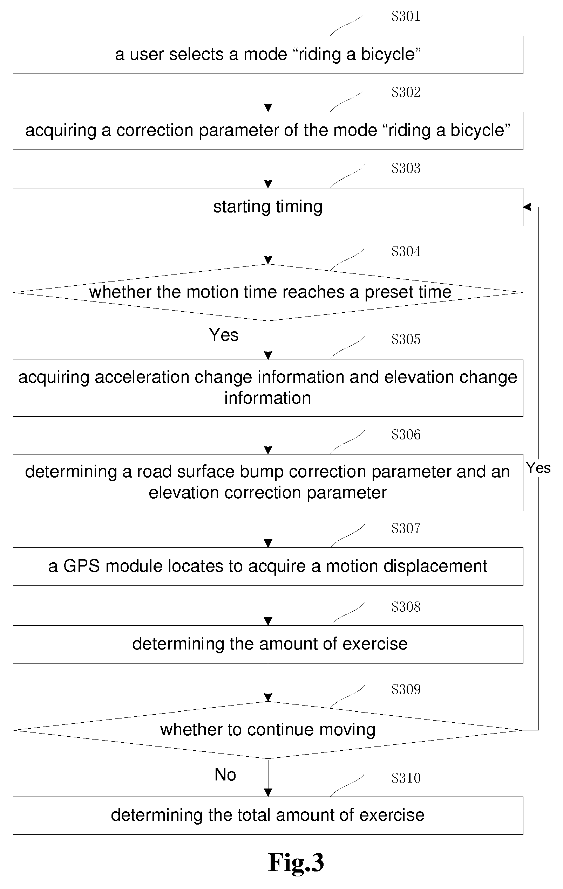

Fig. 3 is a flowchart of a method for calculating the amount of exercise according to Embodiment 2 of the present disclosure. As shown in Fig. 3, the method includes:
S301: a user selects a mode "riding a bicycle".
S302: acquiring a correction parameter of the mode "riding a bicycle", wherein this correction parameter is a preset parameter, each exercise mode corresponds to a correction parameter. For example, the correction parameter of the mode "riding a bicycle" is M=3000 calories, which can be determined according to the calorie consumption in each meter when a person rides a bicycle on a flat road.
S303: starting timing.
S304: whether the motion time reaches a preset time, if so, enter S305.
S305: acquiring acceleration change information and elevation change information, wherein the acceleration change information is acquired by the acceleration sensor and the elevation change information is acquired by the pressure sensor; since the user presets a time period and the road environment does not change when the user moves in this period, the information related to the road environment within this period can be acquired when the preset time expires; of course, if the user does not preset a time period, or the road environment changes constantly during the moving process, the time for acquiring the information related to the road environment can be controlled by the user, or the road environment change information can be acquired in real time.
S306: determining a road surface bump correction parameter and an elevation correction parameter; specifically, determining the road surface bump correction parameter according to the acceleration change information acquired by the acceleration sensor, determining the elevation correction parameter according to elevation change information acquired by the pressure sensor. The road surface bump correction parameter can be determined by a calculation method of road surface bumpy degree in conventional art, for example, determining according to the relationship between the longitudinal acceleration change value acquired by the acceleration sensor and the road surface bumpy degree; the elevation correction parameter can be determined based on an elevation change ratio calculated according to the elevation change information acquired by the pressure sensor in conjunction with the motion displacement. Of course, the road surface bump correction parameter and the elevation correction parameter also can be determined by other methods, only if the road surface bump correction parameter is related to the road surface bumpy degree, the elevation correction parameter is related to the elevation change. For example, the motion displacement of a user is 200 meters, the elevation is increased by 10 meters, then the elevation correction parameter H=1 +(10/200)=1.05.
S307: a GPS module locates to acquire a motion displacement; at the end of this period of motion, acquiring the motion displacement of the user within this period.
S308: determining the amount of exercise; specifically, determining the amount of exercise according to the motion displacement during this period, the road surface bump correction parameter, the elevation correction parameter and the exercise mode correction parameter. The amount of exercise of the user can be determined according to the following formula: motion displacement * exercise mode correction parameter * elevation correction parameter * road surface bump correction parameter. For example, the motion displacement of the user is 200 meters, the correction parameter for the user to move by selecting the mode "riding a bicycle" is 3000 calories, the elevation correction parameter is 1.05 and the road surface bump correction parameter is 1.2, then the amount of exercise of the user is: 200 * 3000 * 1.05 * 1.2=756000 calories.
S309: whether to continue moving; if so, enter S303; otherwise, enter S310.
S310: determining the total amount of exercise, wherein the total amount of motion is the sum of the amount of exercise of each period.

The above description are only example embodiments of the present disclosure; it should be noted that, for the ordinary skilled in the art, various changes and modifications can be made without departing from the principle of the present disclosure, and these changes and modifications are intended to be included within the scope of protection of the present disclosure.

## Claims

1. A method for calculating the amount of exercise, comprising:
acquiring information related to a road environment;
determining, according to the acquired information related to the road environment, a first correction parameter corresponding to the information related to the road environment;
acquiring a motion displacement of a user; and
determining the amount of exercise of the user according to the motion displacement and the first correction parameter.

2. The method according to claim 1, wherein before acquiring information related to a road environment, the method further comprises:
acquiring a exercise mode selected by the user from the preset exercise modes, the exercise mode being a motion manner defined according to a motion type;
acquiring a second correction parameter corresponding to the selected exercise mode;
determining the amount of exercise of the user specifically comprises:
determining the amount of exercise of the user according to the motion displacement, the first correction parameter and the second correction parameter.

3. The method according to claim 1, wherein before acquiring information related to a road environment, the method further comprises:
calculating the time of motion of the user;
acquiring information related to a road environment specifically comprises:
when the time of motion of the user reaches a preset time, acquiring information related to the road environment;
acquiring a motion displacement of the user further comprises:
when the time of motion of the user reaches a preset time, acquiring a motion displacement of the user.

4. The method according to claim 1, wherein
the information related to a road environment comprises: road surface elevation information, acceleration change information related to the road surface bumpy degree;
determining, according to the acquired information related to the road environment, a first correction parameter corresponding to the information related to the road environment further comprises:
determining, according to the road surface elevation information, an elevation change correction parameter corresponding to the road surface elevation information; and
determining, according to the acceleration change information related to the road surface bumpy degree, a road surface bump correction parameter.

5. The method according to claim 2, wherein
the exercise mode comprises walking, running and riding a bicycle.

6. An apparatus for calculating the amount of exercise, comprising:
a sensor module, which is configured to acquire information related to a road environment;
a first determination module, which is configured to determine, according to the acquired information related to the road environment, a first correction parameter corresponding to the information related to the road environment;
a GPS module, which is configured to acquire a motion displacement of a user; and
a second determination module, which is configured to determine the amount of exercise of the user according to the motion displacement and the first correction parameter.

7. The apparatus according to claim 6, further comprising:
a first acquisition module, which is configured to acquire a exercise mode selected by the user from the preset exercise modes, the exercise mode being a motion manner defined according to a motion type;
a second acquisition module, which is configured to acquire a second correction parameter corresponding to the selected exercise mode;
the second determination module is further configured to determine the amount of exercise of the user according to the motion displacement, the first correction parameter and the second correction parameter.

8. The apparatus according to claim 6, further comprising:
a timing module, which is configured to calculate the time of motion of the user;
the sensor module is further configured to acquire information related to the road environment when the time of motion of the user reaches a preset time;
the GPS module, which is further configured to acquire a motion displacement of the user when the time of motion of the user reaches a preset time.

9. The apparatus according to claim 6, wherein
the sensor module comprises:
a motion detection sensor, which is configured to acquire acceleration change information related to the road surface bumpy degree;
a pressure sensor, which is configured to acquire road surface elevation information;
the first determination module comprises:
a first determination unit, which is configured to determine, according to the road surface elevation information, an elevation change correction parameter corresponding to the road surface elevation information; and
a second determination unit, which is configured to determine, according to the acceleration change information related to the road surface bumpy degree, a road surface bump correction parameter.

10. The apparatus according to claim 9, wherein
the motion detection sensor at least comprises one of the following: acceleration sensor, magnetic sensor, gyroscope sensor.

11. A mobile phone, comprising an apparatus for calculating the amount of exercise described according to any one of claims 6 to 10.
